# EUROPEAN PATENT APPLICATION

(11) **EP 2 642 136 A1**
(43) Date of publication of application: **25.09.2013**
(21) Application number: 12160202.3
(22) Date of filing: 19.03.2012
(51) Int. Cl.: F16B 5/02

(54) **Coupling structure and method to connect coupling parts**

(71) Applicant: Alstom Technology Ltd, 5400 Baden (CH)
(72) Inventor: Safari Zadeh, Hossein, 5504 Othmarsingen (CH); Novosel, Damir, 5103 Möriken (CH)

(57) **Abstract**

A coupling structure comprising coupling parts and aligners to connect the coupling parts. The aligner comprises a first circular element (1) with a first eccentric hole (6) and is contained in a hole (5) of a first coupling part (2). The structure gives flexibility to assemble the coupling parts and thus reduces the machining and assembling difficulty of the coupling parts.

## Description

### TECHNICAL FIELD

The present disclosure relates to a coupling structure, more particularly, it relates to a coupling structure with aligners to connect coupling parts. The present disclosure also relates to a method to connect coupling parts with aligners.

### BACKGROUND

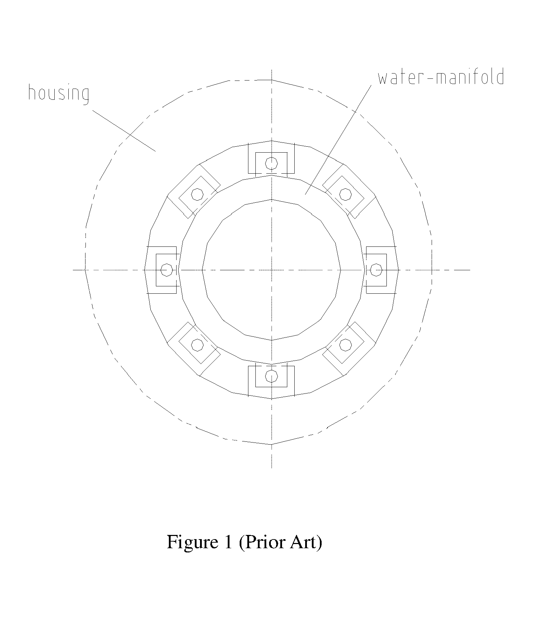

It is common to apply bolts or rivets and the like to connect two coupling parts in a machine. In many cases, the connection of two coupling parts needs a plurality of bolts. For example, Figure 1 shows a coupling structure of a water-manifold to a generator housing in an electric machine. The water-manifold has a ring shape with several coupling plates over the ring. The housing is shown in partial with several plates to be connected to the coupling plates of the water-manifold. In this coupling structure, several pairs of coupling plates will be joined by bolts, which requires all the bolt holes to be aligned at the same time. This requires a high machining precision of the holes as a machining error of one hole may cause accumulation errors so that the alignment of all the holes cannot be achieved.

Another example of a coupling structure is applied to fix a machine foundation. In this case, a plurality of anchor bolts are used to fix a machine foundation to some place, which also requires all the corresponding coupling parts to be aligned at the same time before inserting the bolts.

Therefore, the current coupling structure, especially with a plurality of coupling parts, has higher requirements for machining and also assembling of the relevant coupling parts, which increases the cost and time of machining and assembling.

### SUMMARY

An aspect of the disclosure includes providing a coupling structure with aligners to connect coupling parts, which gives flexibility to assemble the coupling parts and thus reduces the machining and assembling difficulty of the coupling parts.

Another aspect of the disclosure provides a method to connect coupling parts with aligners.

These and further aspects are attained by providing a coupling structure and a method in accordance with the accompanying claims.

### BRIEF DESCRIPTION OF THE DRAWINGS

Further characteristics and advantages will be more apparent from the description of a preferred but non-exclusive embodiment of the coupling structure and method, illustrated by way of non-limiting example in the accompanying drawings, in which:
Figure 1 is a schematic view of a coupling structure of several coupling parts according to the prior art;
Figure 2 is a section view showing the coupling structure according to the first embodiment of the disclosure;
Figure 3 is a side view of the coupling structure of Figure 2;
Figure 4 is a section view showing the coupling structure according to the second embodiment of the disclosure;
Figure 5 is a side view of the coupling structure of Figure 4;
Figures 6 through 8 are schematic views showing the variants of the second embodiment of the disclosure;
Figure 9 is a plan view of the part 4 of figure 8; and
Figure 10 is a plan view of the part 1 of figure 8.

### DETAILED DESCRIPTION OF EMBODIMENTS OF THE INVENTION

In the following like reference numerals designate identical or corresponding parts throughout the several views.

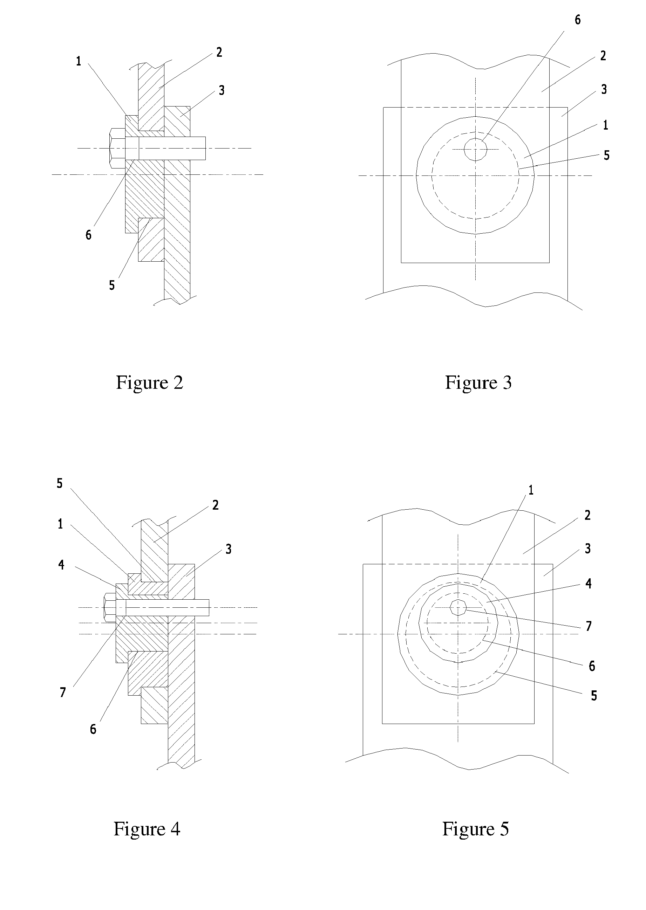

In the first embodiment of the disclosure as shown in Figure 2, a first coupling part 2 is joined with a second coupling part 3 through a first circular element 1 and a bolt. The second coupling part 3 has a bolt hole to receive the bolt; the first coupling part 2 has a hole 5 bigger than the bolt hole to receive the first circular element 1. The first circular element 1 has an eccentric hole 6 and a circular step. Since the hole 6 is eccentrically provided in the first circular element 1, the position of the hole 6 can be adjusted around the central line of the first circular element 1 by rotating the first circular element 1 in the hole 5. When the hole 6 is adjusted to align with the bolt hole in the second coupling part 3, the bolt can be inserted. The step of the first circular element 1 abuts on the first coupling part 2 and fastens the first and second coupling part as the bolt is tightened.

Figure 3 is a side view of Figure 2 with the bolt removed. As shown in Figure 3, the eccentric circle 6 can be adjusted around the centre of the first circular element 1.

The above coupling structure gives flexibility on adjustment to allow machining and assembling errors of the coupling parts to certain extent.

Figure 4 illustrates the second embodiment of the disclosure that is similar to the first embodiment. The description of the similar parts is omitted. The difference is that a second circular element 4 is applied to give more flexibility. In particular, the first circular element 1 has an eccentric hole 6 to receive a second circular element 4. The second circular element 4 has an eccentric hole 7 to receive the bolt. The second circular element 4 is also provided with a circular step.

Before inserting the bolt, the first circular element 1 and the second circular element 4 are rotated around their respective central line to align the hole 7 with the bolt hole in the second coupling part 3. Then the bolt is inserted and the step of the second circular element 4 abuts on the first circular element 1 and fastens the first circular element 1 as well as the first and second coupling part as the bolt is tightened.

Figure 5 is a side view of Figure 4 with the bolt removed. The eccentric hole 7 can be adjusted through the rotation of the first circular element 1 and the second circular element 4. With two circular elements having eccentric holes therein, the coupling structure in the second embodiment provides more flexibility on adjustment to allow machining and assembling errors of the coupling parts.

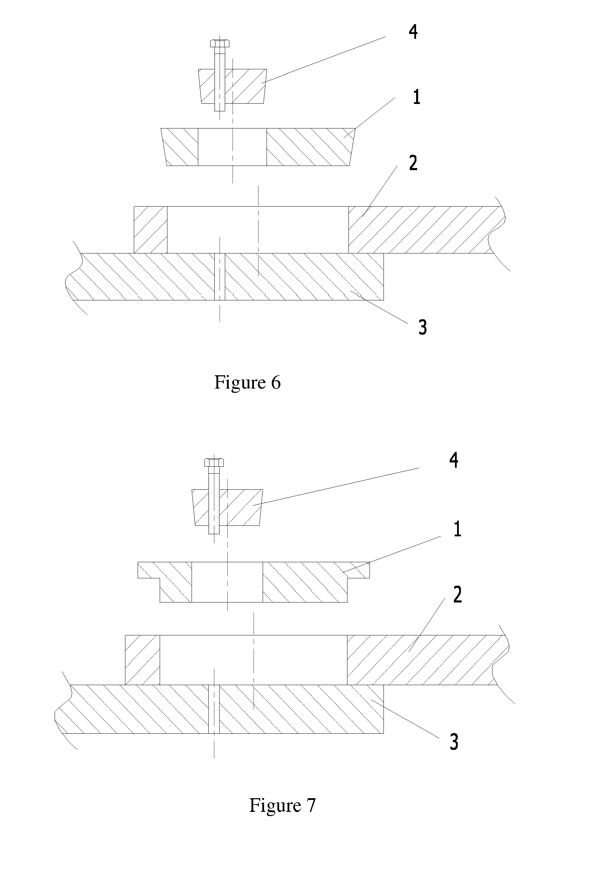

Figures 6-8 show the variants of the second embodiment of the disclosure.

In Figure 6, instead of the step formed on the first circular element 1, the circumferential surface of the first circular element 1 can be machined to a slope to form inference fit within the first coupling part 2. Similarly, the circumferential surface of the second circular element 4 can be machined to a slope to form inference fit within the first circular element 1. When the first and second circular elements are rotated to an appropriate position so that the holes are aligned, both elements are pressed into the corresponding holes and tightened in inference fit. Then the bolt can be inserted to connect the coupling parts.

Further, instead of being formed on the circumferential surface of the first and second circular elements as shown in Figure 6, the slopes can be formed in the surface of the hole in the first circular element 1 and the first coupling part 2.

A preferred slope angle is between 0.1° - 10° depending on the thickness and material properties of the coupling parts.

It is noted that this "slope" form can also be applied in the first embodiment instead of the "step" form.

In Figure 7, the first circular element 1 adopts the "step" form and the second circular element 4 adopts the "slope" form. Of course, it is also possible to adopt the "step" form in the second circular element 4 and adopt the "slope" form in the first circular element 1.

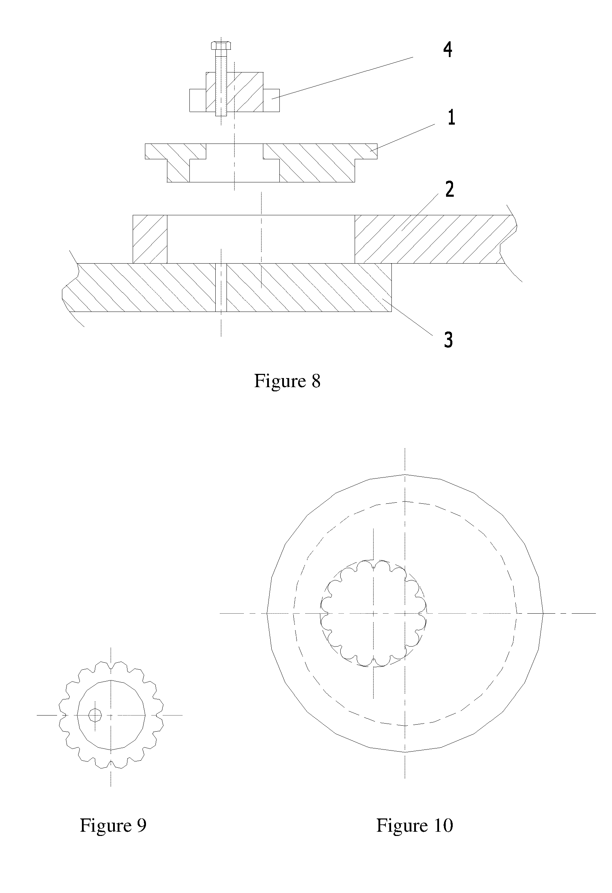

Figure 8 shows another variant of the second embodiment; Figure 9 shows the plan view of the second circular element 4 of Figure 8 with the bolt removed; Figure 10 shows the plan view of the first circular element 1 of Figure 8.

In this variant, the second circular element 4 is formed with a plurality of radial protrusions along its circumference. Correspondingly, the first circular element 1 has the same number of radial inner protrusions along the hole surface complementary to the protrusions in the second circular element 4. The holes in the first and second circular element are eccentric. The first circular element 1 is provided with a step along its circumference. Instead of the step, it is also possible to form slope either in the circumferential surface of the first circular element 1 or the hole surface of the first coupling part 2.

The second circular element 4 can be placed into the first circular element 1 when the protrusions of the two elements are in complementary state. Then, when rotated, the second circular element 4 can be locked in the first circular element 1 in the axial direction by the opposite protrusions of the two elements. Through the rotation of the first circular element 1 and the second circular element 4, the holes can be aligned and then a bolt is inserted to fasten the connection of two coupling parts.

The coupling structure as described in the above embodiments can be applied in any misaligned assembly, including but not limited to generator or motor foundation coupling, the coupling between turbine and generator, and various covers within a machine.

Naturally the features described may be independently provided from one another.

The embodiments conceived in this manner are susceptible to numerous modifications and variants, all falling within the scope of the inventive concept; moreover all details can be replaced by technically equivalent elements.

In practice the materials used and the dimensions can be chosen at will according to requirements and to the state of the art.

### REFERENCE NUMBERS

- 1: first circular element
- 2: first coupling part
- 3: second coupling part
- 4: second circular element
- 5: hole of first coupling part
- 6: first eccentric hole
- 7: second eccentric hole

## Claims

1. A coupling structure comprising coupling parts and at least an aligner to connect the coupling parts, **characterised in that** the aligner comprises a first circular element (1) with a first eccentric hole (6) and is contained in a hole (5) of a first coupling part (2).

2. The coupling structure according to claim 1, **characterised in that** the first circular element (1) comprises a circular step to abut on the first coupling part (2).

3. The coupling structure according to claim 1, **characterised in that** either the circumferential surface of the first circular element (1) or the surface of the hole (5) of the first coupling part (2) is a slope to form interference fit between the first circular element (1) and the first coupling part (2).

4. The coupling structure according to claim 1, **characterised in that** the aligner further comprises a second circular element (4) with a second eccentric hole (7), the second circular element (4) being contained in the first eccentric hole (6) of the first circular element (1).

5. The coupling structure according to claim 4, **characterised in that** the first circular element (1) comprises a circular step to abut on the first coupling part (2).

6. The coupling structure according to claim 4 or 5, **characterised in that** the second circular element (4) comprises a circular step to abut on the first circular element (1).

7. The coupling structure according to claim 4, **characterised in that** either the circumferential surface of the first circular element (1) or the surface of the hole (5) of the first coupling part (2) is a slope to form interference fit between the first circular element (1) and the first coupling part (2).

8. The coupling structure according to claim 4 or 5, **characterised in that** either the circumferential surface of the second circular element (4) or the surface of the first eccentric hole (6) of the first circular element (1) is a slope to form interference fit between the first circular element (1) and the second circular element (4).

9. The coupling structure according to claim 5 or 7, **characterised in that** the first circular element (1) further comprises a plurality of radial inner protrusions, the second circular element (4) comprises a plurality of radial outer protrusions complementary to the inner protrusions of the first circular element (1).

10. The coupling structure according to claim 1, **characterised in that** the coupling parts (2) belong to an electric machine, preferably an electric generator, more preferably a water-manifold of an electric generator.

11. A method for connecting coupling parts through an aligner that comprises a first circular element (1) having a first eccentric hole (6) and being contained in a hole (5) of a first coupling part (2);
the method being **characterised by**
rotating the first circular element (1) to align the first eccentric hole (6) to a hole in a second coupling part (3),
inserting a bolt to connect the first coupling part (2) and the second coupling part (3).

12. The method according to claim 11, wherein the aligner further comprises a second circular element (4) with a second eccentric hole (7), the second circular element (4) being contained in the first eccentric hole (6) of the first circular element (1),
the method being **characterised by**
rotating the second circular element (4) to align the second eccentric hole (7) to the hole in the second coupling part (3) before inserting the bolt.
